(19) Europäisches Patentamt
European Patent Office
Office européen des brevets

(11) Veröffentlichungsnummer: **0 427 072 A1**

(12) **EUROPÄISCHE PATENTANMELDUNG**

(21) Anmeldenummer: **90120649.0**

(22) Anmeldetag: **27.10.90**

(51) Int. Cl.5: **A01N 43/707**, //(A01N43/707, 37:40)

(30) Priorität: **10.11.89 DE 3937475**

(43) Veröffentlichungstag der Anmeldung: **15.05.91 Patentblatt 91/20**

(84) Benannte Vertragsstaaten: **DE ES FR IT**

(71) Anmelder: **BAYER AG**
**W-5090 Leverkusen 1 Bayerwerk(DE)**

(72) Erfinder: **Feucht, Dieter, Dr.**
**Geschwister-Scholl-Strasse 88**
**W-4019 Monheim 2(DE)**

(54) **Selektiv-herbizide Mittel, enthaltend Metribuzin in Kombination mit Bromoxynil.**

(57) Die neuen - synergistischen - Wirkstoffkombinationen, bestehend aus (1) 4-Amino-6-(1,1-dimethylethyl)-3-(methylthio)-1,2,4-triazin-5(4H)-on (Metribuzin) der Formel (I) und (2) 3,5-Dibrom-4-hydroxybenzonitril (Bromoxynil) der Formel (II)

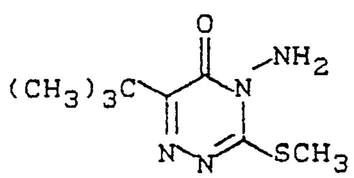 (I) und 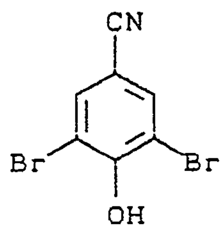 (II)

können mit Vorteil zur selektiven Unkrautbekämpfung in Maiskulturen verwendet werden, wobei auch sonst schwer bekämpfbare Unkräuter wie Ipomoea hederacea und Hirsearten gut mitbekämpft werden.

EP 0 427 072 A1

## SELEKTIV-HERBIZIDE MITTEL, ENTHALTEND METRIBUZIN IN KOMBINATION MIT BROMOXYNIL

Die Erfindung betrifft neue herbizide, synergistische Wirkstoffkombinationen, die aus Metribuzin einerseits und Bromoxynil andererseits bestehen und mit besonderem Vorteil zur selektiven Unkrautbekämpfung in Maiskulturen verwendet werden können, wobei eine ganze Reihe wichtiger Maisunkräuter sicher bekämpft werden können.

Es ist bereits bekannt geworden, daß 4-Amino-6-(1,1-dimethylethyl)-3-(methylthio)-1,2,4-triazin-5(4H)-on (common name: Metribuzin) als selektives Herbizid in Kulturen wie Sojabohnen, Kartoffeln, Weizen, Tomaten, Spargel, Luzerne und Zuckerrohr eingesetzt werden kann (vgl. z.B. DE-Patentschriften 15 42 873 und 17 95 784 sowie US-Patentschriften 3 671 523, 3 905 801, 3 961 936, 4 036 632 und 4 346 220). Seine herbiziden Eigenschaften wurden u.a. beschrieben von W. Draber et al. (Naturwissenschaften, 1968, Bd. 55, S. 446) und L. Eue (Pflanzenschutz-Nachr. (engl. Ausgabe) 1972, Bd. 25, S. 175).

Weiterhin ist bereits bekannt geworden, daß 3,5-Dibrom-4-hydroxybenzonitril (common name: Bromoxynil) sowie seine Salze und Ester als selektive Kontaktherbizide im Nachauflauf in Kulturen wie Getreide, Mais, Sorghum, Zwiebeln, Flachs oder auch neuangelegtem Rasen eingesetzt werden können (vgl. z.B. die GB-Patentschrift 1 067 033 sowie die US-Patentschriften 3 397 054 und 4 332 613). Die herbiziden Eigenschaften vom Bromoxynil wurden u.a. beschrieben von R.L. Wain (Nature (London), 1963, Bd. 200, S. 28) und K. Carpenter & B.J. Heywood (ibid., S. 28). Seine Entwicklung wurde besprochen von B.J. Heywood (Chem. Ind. (London), 1966, S. 1946).

Metribuzin bekämpft als Herbizid eine ganze Reihe dikotyler und monokotyler Schadpflanzen in wichtigen Kulturen. Es wirkt sowohl über den Boden als auch über die Blätter, indem es die Photosynthese in empfindlichen Pflanzen hemmt. Als Herbizid hat es große Bedeutung in der landwirtschaftlichen Praxis erlangt.

Gegen bestimmte Unkräuter ist aber die Wirkung des Metribuzins nicht immer ausreichend. So wird z.B. eine bestimmte Ipomoea-Art, Ipomoea hederacea, die im Soja-und Maisanbau in Nordamerika von großer Bedeutung ist, bei den von diesen Kulturen tolerierten Aufwandmengen von Metribuzin nicht ausreichend bekämpft. Speziell bei den von Mais tolerierten Aufwandmengen von Metribuzin ist häufig die Wirkungsbreite nicht befriedigend.

Bromoxynil hat als Herbizid überwiegend Kontaktwirkung, so daß nach der Anwendung neu auflaufende Unkräuter nicht erfaßt werden können. Desweiteren bekämpft Bromoxynil nur dikotyle Schadpflanzen, Schadgrässer werden nicht bekämpft.

Es wurde nun überraschend gefunden, daß die neuen Wirkstoffkombinationen bestehend aus

(1) 4-Amino-6-(1,1-dimethylethyl)-3-(methylthio)-1,2,4-triazin-5(4H)-on (Metribuzin) der Formel (I)

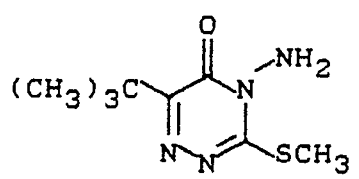

(I)

und

(2) 3,5-Dibrom-4-hydroxybenzonitril (Bromoxynil) der Formel (II)

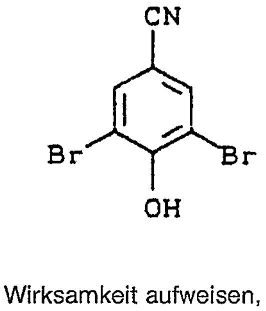

(II)

eine besonders hohe herbizide Wirksamkeit aufweisen, ohne Maiskulturen zu schädigen.

Überraschenderweise ist die herbizide Wirksamkeit der erfindungsgemäßen Wirkstoffkombinationen wesentlich höher als die Summe der Wirkungen der einzelnen Wirk stoffe. Es liegt somit ein nicht

vorhersehbarer echter synergistischer Effekt vor und nicht nur eine Wirkungsergänzung. Die neuen Wirkstoffkombinationen sind in Maiskulturen gut verträglich, wobei die neuen Wirkstoffkombinationen auch sonst schwer bekämpfbare Unkräuter wie Ipomoea hederacea und Hirsen gut bekämpfen. Die neuen Wirkstoffkombinationen stellen somit eine wertvolle Bereicherung der Maisherbizide dar.

Als Unkräuter, die im allgemeinen als Verunreinigungen in Maiskulturen auftreten und durch die erfindungsgemäßen Wirkstoffkombinationen bekämpft werden können, seien beispielsweise genannt:

Dikotyle Unkräuter der Gattungen: Sinapis, Galium, Stellaria, Matricaria, Anthemis, Galinsoga, Chenopodium, Senecio, Amaranthus, Portulaca, Xanthium, Convolvulus, Ipomoea, Polygonum, Sesbania, Ambrosia, Solanum, Lamium, Veronica, Abutilon, Sida, Datura, Viola, Galeopsis, Centaurea; sowie monokotyle Unkräuter der Gattungen: Echinochloa, Setaria, Panicum, Digitaria, Phleum, Poa, Festuca, Eleusine, Brachiaria, Lolium, Bromus, Avena, Alopecurus, Apera.

Die Verwendung der erfindungsgemäßen Wirkstoffkombinationen ist jedoch keineswegs auf diese Gattungen beschränkt, sondern erstreckt sich in gleicher Weise auch auf andere Pflanzen.

Die erfindungsgemäßen Wirkstoffkombinationen weisen, wie bereits angegeben, bei guter Verträglichkeit gegenüber Maiskulturen eine hervorragende Wirkung gegen Unkräuter und Ungräser auf; ihr Einsatz als selektive Maisherbizide ist daher besonders bevorzugt.

Der synergistische Effekt der erfindungsgemäßen Wirkstoffkombinationen ist bei bestimmten Konzentrationsverhältnissen besonders stark ausgeprägt. Jedoch können die Gewichtsverhältnisse der Wirkstoffe in den Wirkstoffkombinationen in relativ großen Bereichen variiert werden. Im allgemeinen entfallen auf 1 Gewichtsteil Wirkstoff der Formel (I) 0,1 bis 30 Gewichtsteile, vorzugsweise 1 bis 10 Gewichtsteile und besonders bevorzugt 1 bis 8 Gewichtsteile Wirkstoff (II).

Die Wirkstoffe können in die üblichen Formulierungen überführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungs mittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylaryl-polyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoffkombination, vorzugsweise zwischen 0,5 und 90 %.

Die erfindungsgemäßen Wirkstoffkombinationen werden im allgemeinen in Form von Fertigformulierungen zur Anwendung gebracht. Die in den Wirkstoffkombinationen enthaltenen Wirkstoffe können aber auch in Einzelformulierungen bei der Anwendung gemischt, d.h. in Form von Tankmischungen zur Anwendung

gebracht werden.

Die neuen Wirkstoffkombinationen können als solche oder in ihren Formulierungen weiterhin auch in Mischung mit anderen bekannten Maisherbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich. Für bestimmte Anwendungszwecke, insbesondere im Nachauflaufverfahren, kann es ferner vorteilhaft sein, in die Formulierungen als weitere Zusatzstoffe pflanzenverträgliche mineralische oder vegetabilische Öle (z.B. das Handelspräparat "Oleo Dupont 11E") oder Ammoniumsalze wie z.B. Ammoniumsulfat oder Ammoniumrhodanid aufzunehmen.

Die neuen Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die Aufwandmengen der erfindungsgemäßen Wirkstoffkombinationen können in einem gewissen Bereich variiert werden; sie hängen u.a. vom Wetter und von den Bodenfaktoren ab. Im allgemeinen liegen die Aufwandmengen zwischen 0,05 und 5 kg pro ha, vorzugsweise zwischen 0,1 und 1 kg pro ha, besonders bevorzugt zwischen 0,2 und 0,6 kg pro ha.

Die erfindungsgemäßen Wirkstoffkombinationen können nach dem Auflaufen der Pflanzen appliziert werden, also im Nachauflauf-Verfahren.

Die gute herbizide Wirkung der neuen Wirkstoffkombinationen geht aus den nachfolgenden Beispielen hervor. Während die einzelnen Wirkstoffe in der herbiziden Wirkung Schwächen aufweisen, zeigen die Kombinationen eine sehr gute Unkrautwirkung, die über eine einfache Wirkungssummierung hinausgeht.

Ein synergistischer Effekt liegt bei Herbiziden immer dann vor, wenn die herbizide Wirkung der Wirkstoffkombination größer ist als die der einzelnen applizierten Wirkstoffe.

Die zu erwartende Wirkung für eine gegebene Kombination zweier Herbizide kann wie folgt berechnet werden (vgl. COLBY, S.R.; "Calculating synergistic and antagonistic responses of herbicide combinations", Weeds 15, Seiten 20 - 22, 1967):

Wenn $X$ = % Schädigung durch Herbizid A bei p kg/ha Aufwandmenge und
$Y$ = % Schädigung durch Herbizid B bei q kg/ha Aufwandmenge und
$E$ = die erwartete Schädigung der Herbizide A und B, bei p und q kg/ha Aufwandmenge,
dann ist $E = X + Y - (X * Y/100)$.

Ist die tatsächliche Schädigung größer als berechnet, so ist die Kombination in ihrer Wirkung überadditiv, d.h. sie zeigt einen synergistischen Effekt.

Aus den nachfolgenden Beispielen geht hervor, das die gefundene herbizide Wirkung der erfindungsgemaßen Wirkstoffkombinationen bei den Unkräutern größer ist als die berechnete, d.h., daß die neuen Wirkstoffkombinationen synergistisch wirken.

Beispiele:

Nachauflauf-Teste

Zur Herstellung der für die Versuche benötigten Wirkstoffzubereitungen werden entsprechende Mengen von handelsüblichen Formulierungen von Metribuzin und Bromoxynil abgewogen und mit Wasser auf die gewünschte Konzentration verdünnt; durch Mischen werden unterschiedliche Kombinationen der beiden Wirkstoffe hergestellt.

Als Metribuzin-Formulierung wurde ein 70 %ige WG (dispergierbares Granulat) eingesetzt (Handelsname: ®SENCOR, Fa. Bayer AG).

Als Bromoxynil-Formulierung wurde ein EC (emulgierbares Konzentrat) mit 235 g/l Bromoxynil-Ester eingesetzt (Handelsname: ®CERTROL B, Fa. Spiess Urania).

Mit den Wirkstoffzubereitungen spritzt man Testpflanzen, welche eine Höhe von 5 bis 15 cm haben, so, daß die jeweils gewünschten Wirkstoffmengen pro Flächeneinheit ausgebracht werden. Die Konzentration der Spritzbrühen wird so gewählt, daß in 500 l Wasser pro ha die jeweils gewünschten Wirkstoffmengen ausgebracht werden. Nach der Behandlung werden die Testpflanzen im Gewächshaus unter kontrollierten Bedingungen (Temperatur, Luftfeuchte, Licht) bis zur Auswertung gehalten. Nach drei Wochen wird der Schädigungsgrad der Pflanzen in % Schädigung im Vergleich zur Entwicklung unbehandelter Kontrollpflanzen bonitiert.

Es bedeuten:

0 = keine Wirkung/Schädigung (wie unbehandelte Kontrolle)

100 = totale Vernichtung

Wirkstoffe, Aufwandmengen und Resultate gehen aus den nachfolgenden Tabellen hervor.

Tabelle 1

| Nachauflauf-Test/Gewächshaus | | | | | |
|---|---|---|---|---|---|
| Wirkstoff bzw. -kombination | Aufwandmenge g/ha (Wirkstoff) | Testpflanzen Schädigung bzw. Wirkung in % | | | |
| | | Mais | | Ipomoea | |
| | | gef.* | ber.* | gef.* | ber.* |
| (I) -bekannt- | 60 | 0 | | 0 | |
| | 30 | 0 | | 0 | |
| (II) -bekannt- | 250 | 0 | | 70 | |
| | 125 | 0 | | 60 | |
| | 60 | 0 | | 50 | |
| (I) + (II) erfindungsgemäß | 60 + 250 | 20 | 0 | 90 | 70 |
| | 60 + 125 | 0 | 0 | 70 | 60 |
| | 60 + 60 | 0 | 0 | 70 | 50 |
| | 30 + 250 | 10 | 0 | 98 | 70 |
| | 30 + 125 | 0 | 0 | 80 | 60 |
| | 30 + 60 | 0 | 0 | 60 | 50 |

(I) = Metribuzin

(II) = Bromoxynil

*gef. = gefundene Schädigung bzw. Wirkung (in Prozent)

*ber. = nach der COLBY-Formel berechnete Schädigung bzw. Wirkung (in Prozent)

Tabelle 2

| Nachauflauf-Test/Gewächshaus | | | | | |
|---|---|---|---|---|---|
| Wirkstoff bzw. -kombination | Aufwandmenge g/ha (Wirkstoff) | Testpflanzen Schädigung bzw. Wirkung in % | | | |
| | | Mais | | Echinochloa | |
| | | gef.* | ber.* | gef.* | ber.* |
| (I)<br>-bekannt- | 60<br>30 | 0<br>0 | | 40<br>10 | |
| (II)<br>-bekannt- | 250<br>125<br>60 | 0<br>0<br>0 | | 20<br>10<br>0 | |
| (I)<br>+<br>(II)<br>erfindungsgemäß | 60+250<br>60+125<br>60+60<br>30+250<br>30+125<br>30+60 | 20<br>0<br>0<br>10<br>0<br>0 | 0<br>0<br>0<br>0<br>0<br>0 | 98<br>70<br>70<br>70<br>50<br>20 | 52<br>46<br>40<br>28<br>20<br>10 |
| (I) = Metribuzin<br>(II) = Bromoxynil | | | | | |

*gef. = gefundene Schädigung bzw. Wirkung (in Prozent)
*ber. = nach der COLBY-Formel berechnete Schädigung bzw. Wirkung (in Prozent)

Tabelle 3

| Nachauflauf-Test/Gewächshaus | | | | | |
|---|---|---|---|---|---|
| Wirkstoff bzw. -kombination | Aufwandmenge g/ha (Wirkstoff) | Testpflanzen Schädigung bzw. Wirkung in % | | | |
| | | Mais | | Digitaria | |
| | | gef.* | ber.* | gef.* | ber.* |
| (I) -bekannt- | 30 | 0 | | 80 | |
| (II)<br>-bekannt- | 250<br>125<br>60 | 0<br>0<br>0 | | 10<br>10<br>0 | |
| (I) + (II)<br>erfindungs-<br>gemäß | 30+250<br>30+125<br>30+60 | 10<br>0<br>0 | 0<br>0<br>0 | 100<br>98<br>80 | 72<br>72<br>80 |
| (I) = Metribuzin<br>(II) = Bromoxynil | | | | | |

*gef. = gefundene Schädigung bzw. Wirkung (in Prozent)
*ber. = nach der COLBY-Formel berechnete Schädigung bzw. Wirkung (in Prozent)

Tabelle 4

| Nachauflauf-Test/Gewächshaus | | | | | |
|---|---|---|---|---|---|
| Wirkstoff bzw. -kombination | Aufwandmenge g/ha (Wirkstoff) | Testpflanzen Schädigung bzw. Wirkung in % | | | |
| | | Mais | | Setaria | |
| | | gef.* | ber.* | gef.* | ber.* |
| (I) -bekannt- | 30 | 0 | | 30 | |
| (II) -bekannt- | 250 | 0 | | 10 | |
| | 125 | 0 | | 0 | |
| | 60 | 0 | | 0 | |
| (I) + (II) erfindungsgemäß | 30 + 250 | 10 | 0 | 70 | 37 |
| | 30 + 125 | 0 | 0 | 60 | 30 |
| | 30 + 60 | 0 | 0 | 50 | 30 |
| (I) = Metribuzin<br>(II) = Bromoxynil | | | | | |

*gef. = gefundene Schädigung bzw. Wirkung (in Prozent)
*ber. = nach der COLBY-Formel berechnete Schädigung bzw. Wirkung (in Prozent)

## Ansprüche

1. Selektiv-herbizide Mittel, gekennzeichnet durch einen Gehalt an einer Wirkstoffkombination bestehend aus

(1) 4-Amino-6-(1,1-dimethylethyl)-3-(methylthio)-1,2,4-triazin-5(4H)-on (Metribuzin) der Formel (I)

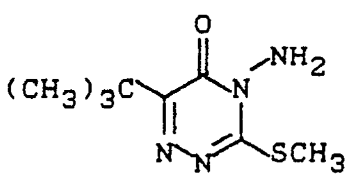

(I) .

und

(2) 3,5-Dibrom-4-hydroxybenzonitril (Bromoxynil) der Formel (II)

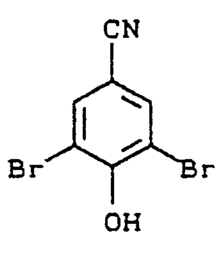

(II).

2. Selektiv-herbizide Mittel gemäß Anspruch 1, dadurch gekennzeichnet, das in den Wirkstoffkombinationen das Gewichtsverhältnis von Wirkstoff der Formel (I) zu dem Wirkstoff der Formel (II) zwischen 1:0,1 und 1:30, vorzugsweise zwischen 1:1 und 1:10 liegt.

3. Verfahren zur selektiven Bekämpfung von Unkraut in Maiskulturen, dadurch gekennzeichnet, daß man eine Wirkstoffkombination gemäß Anspruch 1 nach dem Auflaufen der Pflanzen auf die Maisfelder einwirken läßt.

4. Verwendung von Wirkstoffkombinationen gemäß Anspruch 1 zur selektiven Bekämpfung von Unkraut in Maiskulturen.

5. Verfahren zur Herstellung von selektiv-herbiziden Mitteln, dadurch gekennzeichnet, das man eine Wirkstoffkombination gemäß Anspruch 1 mit Streckmitteln und/oder oberflächenaktiven Mitteln vermischt.

Europäisches
Patentamt

# EUROPÄISCHER RECHERCHENBERICHT

Nummer der Anmeldung

EP 90 12 0649

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | CHEMICAL ABSTRACTS, Band 107, Nr. 11, 14. September 1987, Seite 265, Zusammenfassung Nr. 91806j, Columbus, Ohio, US; F.L. YOUNG et al.: "Efficacy of postharvest herbicides on Russian thistle (Salsola iberica) control and seed germination", & WEED SCI. 1987, 35(4), 554-9 * Zusammenfassung * | 1-5 | A 01 N 43/707 // (A 01 N 43/707 A 01 N 37:40 ) |
| X | COMMONWEALTH AGRICULTURAL BUREAU, Nr. 0W028-00031, WEED ABSTRACTS, Slough, Bucks, GB; H.P. ALLEY et al.: "Annual weed control in wheat and barley", & RESEARCH JOURNAL, WYOMING AGRICULTURAL EXPERIMENT STATION, Nr. 119: RESEARCH IN WEED SCIENCE 1977, 1978, S. 14-22 * Zusammenfassung * | 1-5 | |
| X | COMMONWEALTH AGRICULTURAL BUREAU, Nr. 0W029-00640, WEED ABSTRACTS, Slough, Bucks, GB; H.P. ALLEY et al.: "Research in weed science", & RESEARCH JOURNAL, WYOMING AGRICULTURAL EXPERIMENT STATION, Nr. 137, 1979, S. 21-32 * Zusammenfassung * | 1-5 | RECHERCHIERTE SACHGEBIETE (Int. Cl.5) |
| | | | A 01 N |
| X | COMMONWEALTH AGRICULTURAL BUREAU, Nr. 0W036-00300, WEED ABSTRACTS, Slough, Bucks, GB; G.H. BAYER: "Weed control in winter wheat", & PROCEEDINGS, 40TH ANNUAL MEETING OF THE NORTHEASTERN WEED SCIENCE SOCIETY, 1986, Seite 57 * Zusammenfassung * | 1-5 | |
| | -/- | | |

Der vorliegende Recherchenbericht wurde für alle Patentansprüche erstellt

| Recherchenort | Abschlußdatum der Recherche | Prüfer |
|---|---|---|
| Den Haag | 07 Februar 91 | DONOVAN T.M. |

KATEGORIE DER GENANNTEN DOKUMENTE
X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument

Europäisches Patentamt

# EUROPÄISCHER RECHERCHENBERICHT

Nummer der Anmeldung

**EP 90 12 0649**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 306 376 (COMPAGNIE FRANCAISE DE PRODUITS INDUSTRIELS)<br>* Seite 2, Zeile 59 - Seite 3, Zeile 25; Patentansprüche *<br>- - - - - | 1-5 | |

RECHERCHIERTE SACHGEBIETE (Int. Cl.5)

Der vorliegende Recherchenbericht wurde für alle Patentansprüche erstellt

| Recherchenort | Abschlußdatum der Recherche | Prüfer |
|---|---|---|
| Den Haag | 07 Februar 91 | DONOVAN T.M. |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze

E: älteres Patentdokument, das jedoch erst am oder nach dem Anmeldedatum veröffentlicht worden ist
D: in der Anmeldung angeführtes Dokument
L: aus anderen Gründen angeführtes Dokument

&: Mitglied der gleichen Patentfamilie, übereinstimmendes Dokument